# FASCICULE DE BREVET EUROPEEN

(11) **EP 4 428 612 B1**
(45) Date de publication et mention de la délivrance du brevet: **12.08.2026**
(21) Numéro de dépôt: 24161106.0
(22) Date de dépôt: 04.03.2024
(51) Int. Cl.: G03B 11/04, G06F 1/16, H04M 1/02, H04N 23/55

(54) **OBTURATEUR ET EQUIPEMENT ELECTRONIQUE COMPRENANT AU MOINS UN CAPTEUR OPTIQUE ET UN OBTURATEUR ASSOCIE AUDIT CAPTEUR OPTIQUE**
VERSCHLUSS UND ELEKTRONISCHES GERÄT MIT MINDESTENS EINEM OPTISCHEN SENSOR UND EINEM VERSCHLUSS DAFÜR
SHUTTER AND ELECTRONIC EQUIPMENT COMPRISING AT LEAST ONE OPTICAL SENSOR AND A SHUTTER ASSOCIATED WITH SAID OPTICAL SENSOR

(30) Priorité: 10.03.2023 FR 2302262
(43) Date de publication de la demande: 11.09.2024
(73) Titulaire: Sagemcom Broadband SAS, 92270 Bois-Colombes (FR)
(72) Inventeur: SUSINI, Dominique, 92270 BOIS-COLOMBES (FR); CHUSSEAU, Hugo, 92270 BOIS-COLOMBES (FR); FERREIRA, Arnaud, 92270 BOIS-COLOMBES (FR)
(74) Mandataire: Cabinet Boettcher

(56) Documents cités:
- CN-A- 107 015 418
- US-A1- 2010 166 414
- US-A1- 2016 088 264
- US-A1- 2019 033 686
- US-A1- 2020 214 155
- US-A1- 2021 208 479
- US-B1- 11 079 657
- US-B2- 11 422 433

## Description

L'invention concerne un obturateur comprenant une platine et un cache coopérant avec la platine.

L'invention concerne également un équipement électronique comprenant un capteur optique et un tel obturateur qui permet temporairement de masquer le capteur optique.

### ARRIERE PLAN DE L'INVENTION

De nombreux produits sont équipés d'une caméra et notamment d'une caméra dite « webcam » soit une caméra qui permet d'obtenir une vidéo dont la finalité est de pouvoir être transmise en direct au travers d'un réseau. On peut ainsi citer les téléphones portables, les tablettes, les ordinateurs portables ...

Toutefois, l'utilisateur de ces produits peut vouloir temporairement masquer la caméra.

Une solution classique est d'avoir recours à un cache adhésif repositionnable que l'on vient appliquer devant la caméra.

Une telle solution est peu coûteuse et peu encombrante.

Néanmoins elle s'avère particulièrement visible et peut donc détériorer l'aspect esthétique du produit. En outre, l'adhésif finit par vieillir et le cache a alors tendance à moins bien adhérer au produit.

Depuis quelque temps des ordinateurs portables sont directement équipés d'un cache pouvant coulisser entre une position où il masque la caméra et une position où il libère l'accès à la caméra.

Malheureusement, ces caches sont généralement complexes et coûteux à produire car ils comportent de nombreuses pièces.

### OBJET DE L'INVENTION

L'invention a pour but un obturateur simplifié et vieillissant mieux dans le temps.

L'invention a également pour but un équipement électronique équipé d'un tel obturateur.

### RESUME DE L'INVENTION

A cet effet, on prévoit, selon l'invention un obturateur selon la revendication 1 comprenant :
- Une platine,
- Un cache comportant une protection et une languette de manipulation de la protection, le cache étant apte à se déplacer relativement à la platine entre une position active et une position inactive,

l'obturateur comprenant au moins un couple organe mâle/organe femelle agencé l'un sur la platine et l'autre sur le cache de sorte que la coopération de l'organe mâle et de l'organe femelle bloque en position temporairement le cache dans l'une au moins de ses deux positions,
dans lequel la protection comporte une première face principale et une deuxième face principale, au moins un organe mâle ou un organe femelle du couple étant agencé sur une desdites faces principales de la protection.

Ainsi, l'obturateur comporte simplement deux composants qui coopèrent entre eux pour assurer un blocage du cache en position.

L'invention s'avère ainsi simple de structure et relativement peu coûteuse à produire.

Elle est en outre plus esthétique que des dispositifs de l'art antérieur notamment les dispositifs à base d'adhésif repositionnable.

Par ailleurs, la coopération entre la platine et le cache limite avantageusement les vibrations du cache relativement à la platine.

Ceci est particulièrement utile dans le cas où l'obturateur est agencé dans un équipement électronique qui est sensible aux vibrations, ce qui est par exemple le cas d'un boitier décodeur dont les vibrations parasites peuvent détériorer le son rendu par ledit boitier décodeur.

L'obturateur comprend un premier couple organe mâle/organe femelle pour bloquer le cache dans une première position et un deuxième couple organe mâle/organe femelle pour bloquer le cache dans une deuxième position.

Au moins un premier organe - mâle ou femelle - et au moins un deuxième organe - mâle ou femelle
- sont agencés sur une desdites faces principales de la protection, le premier organe appartenant au premier couple d'organes mâle/femelle et le deuxième organe appartenant au deuxième couple d'organes mâle/femelle.

Le premier organe et le deuxième organe sont agencés sur des côtés opposés de la face principale. Optionnellement, au moins un organe mâle est un élément en relief et au moins un organe femelle est un logement épousant la forme de l'élément en relief.

Optionnellement l'élément en relief est partiellement hémisphérique.

Optionnellement au moins un organe mâle est porté par la platine et au moins un organe femelle est porté par le cache.

Optionnellement au moins une patte est ménagée sur la platine, la patte portant l'organe mâle ou l'organe femelle de la platine.

Optionnellement, la patte est une découpe de la platine. Optionnellement la languette est pourvue d'au moins une zone texturée.

Optionnellement, l'obturateur comprend une portion d'attache flexible entre la protection et la languette. Optionnellement le cache est muni d'un témoin visuel d'au moins l'une de ses positions.

Optionnellement, l'organe agencé sur la face principale de la protection est agencé sur une face opposée à celle portant le témoin visuel.

Optionnellement le cache comporte au moins une encoche latérale.

Optionnellement le cache comprend au moins un guide de son coulissement.

Optionnellement la platine comporte au moins un guide de lumière.

Optionnellement la platine comporte au moins un positionneur.

L'invention concerne également un équipement électronique comprenant :
- Un caisson,
- Un capteur optique agencé dans le caisson,
- Un obturateur tel que précité, l'obturateur étant agencé de sorte que dans sa position active il soit devant le capteur optique et dans une position inactive il soit décalé du capteur optique.

Optionnellement, l'équipement est un boitier électronique. Optionnellement, l'équipement comprend un support portant le capteur optique, le cache étant agencé entre le caisson et la platine et la platine étant agencée entre le cache et le support.

Optionnellement, l'équipement est conformé de sorte que dans la position inactive du cache, un orifice de la protection s'étende dans l'alignement d'un orifice du caisson et dans l'alignement d'un orifice de la platine. Optionnellement, le cache est agencé entre le caisson et la platine.

D'autres caractéristiques et avantages de l'invention ressortiront à la lecture de la description qui suit d'un mode de réalisation particulier et non limitatif de l'invention.

### BREVE DESCRIPTION DES DESSINS

Il sera fait référence aux dessins annexés, parmi lesquels :
[Fig. 1] la figure 1 est une vue en perspective schématique d'un cache d'obturateur selon un mode de réalisation particulier de l'invention ;
[Fig. 2] la figure 2 représente le cache illustré à la figure 1 selon une autre orientation ;
[Fig. 3] la figure 3 est une vue en perspective schématique d'une platine de l'obturateur destinée à être associée au cache représenté à la figure 1 ;

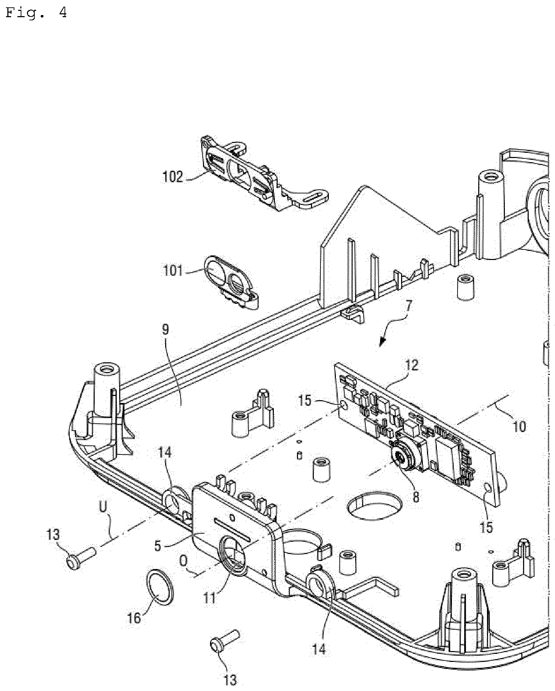

[Fig. 4] la figure 4 est une vue éclatée schématique partielle d'un équipement comprenant le cache représenté à la figure 1 et l'obturateur représenté à la figure 3 ;
[Fig. 5] la figure 5 est une vue schématique en perspective partielle de l'équipement représenté à la figure 4 ;
[Fig. 6] la figure 6 est une vue identique à celle de la figure 5 une fois que la platine est agencée contre le cache ;

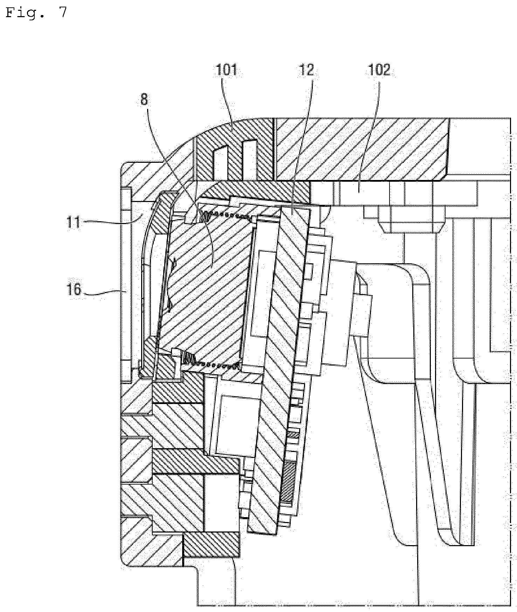

[Fig. 7] la figure 7 est une vue en coupe schématique partielle de l'équipement représenté à la figure 4.

### DESCRIPTION DETAILLEE DE L'INVENTION

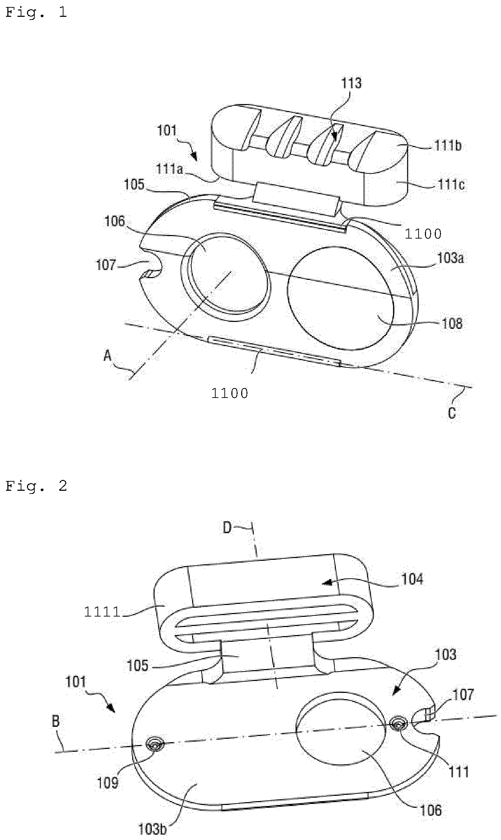

En référence aux figures 1 à 3, il est décrit un obturateur 100 selon un mode de réalisation particulier de l'invention, obturateur 100 destiné à être associé à un capteur optique pour le masquer temporairement.

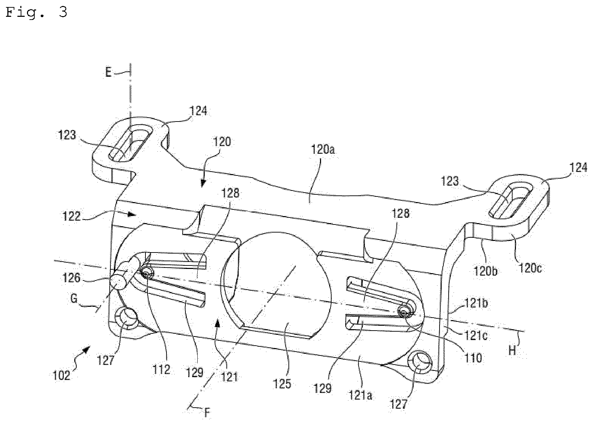

Cet obturateur 100 comporte un cache 101 représenté aux figures 1 et 2 ainsi qu'une platine 102 représentée à la figure 3.

Le cache 101 et/ou la platine 102 sont par exemple en matière plastique. Le cache 101 et/ou la platine 102 sont optionnellement fabriqués par injection plastique. Le cache 101 et/ou la platine 102 sont par exemple en polycarbonate, en acrylonitrile butadiène styrène (ABS) ... Le cache 101 va être le premier décrit.

Le cache 101 comporte une protection 103 ainsi qu'une languette 104 de manipulation de la protection 103.

La protection 103 est conformée en une plaquette. Elle présente donc une épaisseur bien plus faible que ses autres dimensions.

La protection 103 comporte ici une première face principale 103a et une deuxième face principale 103b. La protection 103 comporte ici un unique flanc latéral 105 reliant les deux faces principales 103a, 103b entre elles. De la sorte, la protection 103 ne présente pas d'arête saillante.

La protection 103 présente ici globalement une section transversale (de normale un axe A définissant par ailleurs l'épaisseur de la protection 103) de forme oblongue.

La protection 103 comporte au moins un orifice 106 la traversant de part en part. L'orifice 106 s'étend ici selon l'axe A. L'orifice 106 débouche ainsi sur les deux faces principales 103a, 103b. Typiquement, l'orifice 106 s'étend sur un des côtés de la protection 103. L'orifice 106 présente une section transversale (de normale l'axe A) circulaire.

Optionnellement, la protection 103 comporte une encoche 107 ménagée au niveau du flanc latéral 105. Ladite encoche 107 est par exemple agencée sur le flanc latéral 105 à côté de l'orifice 106. L'encoche 107 ne débouche toutefois pas dans l'orifice 106. En revanche, l'encoche 107 s'étend selon un axe qui est parallèle à l'axe A. L'encoche 107 est ainsi débouchant sur les deux faces principales 103a, 103b mais également sur le flanc latéral 105. L'encoche 107 présente une section transversale (de normale l'axe A) partiellement circulaire.

De préférence, la protection 103 comporte au moins un témoin visuel 108.

Le témoin visuel 108 comporte par exemple une forme géométrique (tel qu'un rond, un triangle, un rectangle) ou bien au moins un symbole alphanumérique ou bien un dessin ... qui est agencé sur la protection. Le témoin visuel 108 est de préférence coloré (orange, blanche, rouge ...). Un diamètre du témoin visuel 108 est par exemple égal ou supérieur à celui de l'orifice 106.

Le témoin visuel 108 est agencé sur au moins l'une des faces principales 103a, 103b et est par exemple agencé uniquement sur la première face principale 103a. Le témoin visuel 108 est plus précisément agencé ici à côté de l'orifice 106. Typiquement, le témoin visuel 108 s'étend sur un des côtés de la protection 103 (opposé à celui où débouche l'orifice 106). Par exemple le témoin visuel 108 ne dépasse pas du milieu de la face principale considérée. La protection 103 comporte au moins un organe femelle destinée à coopérer avec un organe mâle de la platine 102 qui sera décrit plus bas.

De préférence, la protection 103 comporte un premier organe femelle 109 destinée à coopérer avec un premier organe mâle 110 de la platine 102 et un deuxième organe femelle 111 destinée à coopérer avec un deuxième organe mâle 112 de la platine 102. De préférence, les organes femelles 109, 111 sont agencés sur des côtés opposés de la protection 103 et préférentiellement sont agencés sur des côtés opposés de la deuxième face principale 103b (soit la face opposée à celle portant le témoin visuel 108).

Par exemple le premier organe femelle 109 est agencé sur un premier côté de la deuxième face principale 103b et le deuxième organe femelle 111 est agencé sur un deuxième côté de ladite deuxième face principale 103b. Le deuxième organe femelle 109 est ainsi agencé plus proche du flanc latéral 105 que l'orifice 106. Par exemple le deuxième organe femelle 109 est agencé entre l'orifice 106 et l'encoche 107.

Au moins un des organes femelles 109, 111 est un logement ménagé dans la face principale considérée. Le logement est par exemple de forme partiellement hémisphérique. Le logement est par exemple conformé en une demi-sphère. Le logement n'est pas débouchant sur la première face principale.

Optionnellement, les deux organes femelles 109, 111 sont alignés sur un axe B qui est orthogonal à l'axe A. L'axe B définit par exemple la longueur des faces principales 103a, 103b.

Optionnellement l'orifice 106 et/ou l'encoche 107 sont également alignés sur ledit axe B.

La protection 103 est conformée pour pouvoir coulisser relativement à la platine 102 entre une position active et une position inactive. Le coulissement s'effectue ici selon un axe orthogonal à l'axe A. Le coulissement s'effectue ici parallèlement à l'axe B.

De préférence, la protection 103 comporte au moins un guide 1100 de son coulissement et préférentiellement au moins deux guides 1100. Au moins l'un des guides 1100 est conformé en une baguette s'étend longitudinalement selon un axe C. Ledit axe C est par exemple parallèle à l'axe B. Par exemple au moins un des guides 1100 est agencé sur une des faces principales et de préférence sur la première face principale 103a. La deuxième face principale 103b ne comporte pas de tel guide. Par exemple, au moins un guide 1100 est agencé sur un bord inférieur ou supérieur de la première face principale 103a entre les deux côtés de ladite face principale 103a. De préférence, ledit guide 1100 est centré sur la première face principale (selon l'axe B). Par exemple, l'un des guides 1100 est agencé sur le bord supérieur de la première face principale 103a et l'autre sur le bord inférieur, les deux guides 1100 s'étendant parallèlement entre eux.

La languette 104 comporte un support 1111 ainsi qu'une portion d'attache 112 du support 1111 à la protection 103.

La languette de manipulation 104 et la protection 103 sont de préférence d'une seule pièce. Le cache 101 est ainsi d'une seule pièce.

Le support 1111 comporte ici une première face principale 111a et une deuxième face principale 111b. Le support 1111 comporte ici un unique flanc latéral 111c reliant les deux faces principales 111a, 111b entre elles. De la sorte, le support 1111 ne présente pas d'arête saillante. Le support 1111 présente ici globalement une section transversale (de normale un axe D définissant par ailleurs l'épaisseur du support 1111) de forme oblongue.

La portion d'attache 112 est conformée de sorte que le support 1111 s'étende transversalement à la protection 103. Ainsi l'axe D s'étend transversalement à l'axe A (c'est-à-dire ni orthogonalement ni parallèlement).

La portion d'attache 112 est de préférence flexible et présente de préférence un comportement élastiquement déformable.

Une première face principale 111a du support 1111 est ainsi tournée vers la deuxième face principale 103b de la protection 103.

De préférence, le support 1111 est conformé de sorte à présenter au moins une zone texturée 113.

Ceci facilite la manipulation du support 1111 Un doigt d'un utilisateur a en effet moins tendance à glisser le long du support 1111 lorsque l'utilisateur manipule la languette 104 pour faire coulisser le cache 101.

Ladite zone texturée 113 est de préférence ménagée sur au moins la deuxième face principale 111b du support.

La platine 102 va être à présent décrite.

La platine 102 comporte une portion de solidarisation 120, une portion de coopération 121 et une portion de liaison 122 de la portion de coopération 121 à la portion de solidarisation 120. Les trois portions précitées 120, 121, 122 sont de préférence d'une seule pièce.

La platine 102 est de préférence d'une seule pièce.

La portion de solidarisation 120 permet la solidarisation de l'obturateur 100 à un élément externe tel qu'un équipement électronique.

La portion de solidarisation 120 est conformée en une plaquette. La portion de solidarisation 120 comporte ici une première face principale 120a et une deuxième face principale 120b. La portion de solidarisation 120 comporte ici un unique flanc latéral 120c reliant les deux faces principales 120a, 120b entre elles. De la sorte, la portion de solidarisation 120 ne présente pas d'arête saillante.

La portion de solidarisation 120 comporte au moins une ouverture 123 la traversant de part en part. De préférence la portion de solidarisation 120 comporte deux ouvertures 123 la traversant de part en part.

Au moins une ouverture 123 s'étend ici parallèlement à un axe E (correspondant à celui définissant l'épaisseur de la portion de solidarisation 120). Au moins une ouverture 123 débouche ainsi sur les deux faces principales 120a, 120b de la portion de solidarisation 120. Typiquement, au moins une ouverture 123 s'étend sur un des côtés de la portion de solidarisation 120.

Au moins une ouverture 123 présente une section transversale (de normale l'axe E) de forme oblongue.

De préférence, une ouverture 123 est agencée sur un premier côté de la portion de solidarisation 120 et une ouverture 123 est agencée sur un deuxième côté de la portion de solidarisation 120.

Par exemple la portion de solidarisation 120 comporte deux bras 124 agencés sur chacun de ses côtés, chaque bras 124 étant percé par l'une des ouvertures 123.

La portion de coopération 121 permet à la platine 102 de coopérer avec le cache 101.

La portion de coopération 121 est conformée une plaquette. La portion de coopération 121 comporte ici une première face principale 121a et une deuxième face principale 121b. La portion de coopération 121 comporte ici un unique flanc latéral 121ac reliant les deux faces principales 121a, 121b entre elles. De la sorte, la portion de coopération 121 ne présente pas d'arête saillante.

La portion de coopération 121 comporte au moins un orifice 125 la traversant de part en part. L'orifice 125 s'étend ici parallèlement à un axe F (définissant par ailleurs l'épaisseur de la portion de coopération 121). L'orifice 125 débouche ainsi sur les deux faces principales 121a, 121b. Typiquement, l'orifice 125 est centré sur les faces principales 121a, 121b. L'orifice 125 présente une section transversale (de normale l'axe F) de forme circulaire. Le diamètre de l'orifice 125 est plus important que celui de l'orifice 106.

Optionnellement, la portion de coopération 121 comporte un guide lumineux 126 agencé sur un des côtés de la portion de coopération 121. Ledit guide lumineux 126 s'étend ainsi à travers toute la portion de coopération 121. Une première extrémité du guide lumineux 126 s'étend dans un même plan que la deuxième face principale 121b de la portion de coopération 121. Une deuxième extrémité du guide lumineux 126 s'étend au-delà de la première face principale 121a de la portion de coopération 121. Le guide lumineux 126 s'étend selon un axe G qui est ici parallèle à l'axe F.

De préférence, la portion de coopération 121 comporte au moins un positionneur 127 pour faciliter le positionnement de la platine 102 sur l'élément externe.

Le positionneur 127 se présente par exemple sous la forme d'un orifice. Par exemple la portion de coopération 121 comporte deux positionneurs 127, chacun sous la forme d'un orifice. Par exemple les orifices sont agencés sur des côtés de la portion de coopération 121. Les orifices s'étendent de sorte à être débouchant sur chacun des faces principales 121a, 121b. Les orifices s'étendent de préférence parallèlement à l'axe F.

Comme indiqué précédemment, la portion de coopération 121 comporte au moins un organe mâle pour coopérer avec un des organes femelles du cache 101.

De préférence, les organes mâles 110, 112 sont agencés sur des côtés opposés d'une même face principale de la portion de coopération 121. Les organes mâles sont agencés de préférence sur la première face principale 121a. Par exemple un organe mâle 110 est agencé sur un premier côté de la première face principale 121a et un deuxième organe mâle 112 est agencé sur un deuxième côté de ladite première face principale 121a.

Par exemple, les organes mâles 110 et 112 s'étendent à partir de la même première face principale que celle à partir de laquelle s'étend le guide lumineux 126. Optionnellement le guide lumineux 126 s'étend à côté d'un des organes mâles.

Au moins un des organes mâles 110, 112 est un élément en relief. L'élément en relief est par exemple de forme partiellement hémisphérique. L'élément en relief est par exemple conformé en une demi-sphère.

Optionnellement, les deux organes mâles 110, 112 sont alignés sur un axe H qui est orthogonal à l'axe F. Optionnellement le guide lumineux 126 et/ou l'orifice 125 sont également alignés sur ledit axe H.

Préférentiellement, la portion de coopération 121 comporte au moins une patte par organe mâle, chaque patte portant l'un des organes mâles. Dans le cas présent, la portion de coopération comporte donc deux pattes 128.

De préférence, au moins une patte 128 est définie par une découpe de la portion de coopération 121. Au moins une patte 128 comporte ainsi une extrémité d'attache au reste de la portion de coopération 121 et une extrémité libre. L'organe mâle 110, 112 est de préférence porté par l'extrémité libre de la patte 128 considérée.

On comprend donc que ladite patte 128 est flexible. Par exemple la patte 128 présente un caractère élastiquement déformable.

Ceci est dû au fait que ladite patte 128 est définie par une découpe dans la portion de coopération 122.

Au moins une patte 128 s'étend longitudinalement selon un axe parallèle à l'axe H. Ledit axe est ici confondu avec l'axe H.

Au moins une patte 128 est conformée de sorte à présenter une section transversale (de normale l'axe F) en pointe et de préférence en pointe à bout arrondi, la pointe formant l'extrémité libre de la patte 128. Par exemple la patte 128 est conformée en un triangle isocèle, optionnellement en un triangle isocèle avec un sommet principal arrondi, le sommet principal étant arrondi.

On comprend donc qu'au moins une patte 128 est définie par au moins une rainure 129 ménagée dans la portion de coopération 121 de sorte à ce que la rainure 129 débouche sur les deux faces principales 121a, 121b. Dans le cas présent, au moins une patte 128 est définie par une unique rainure 129. Au moins une rainure 129 est par exemple conformée en fer à cheval dont les branches s'écartent de plus en plus en direction de leurs extrémités libres.

La portion de liaison 122 est conformée de sorte que la portion de solidarisation 120 s'étende transversalement à la portion de coopération 121. Ainsi l'axe F s'étend transversalement à l'axe E.

La portion de liaison 122 est de préférence flexible et présente de préférence un comportement élastiquement déformable.

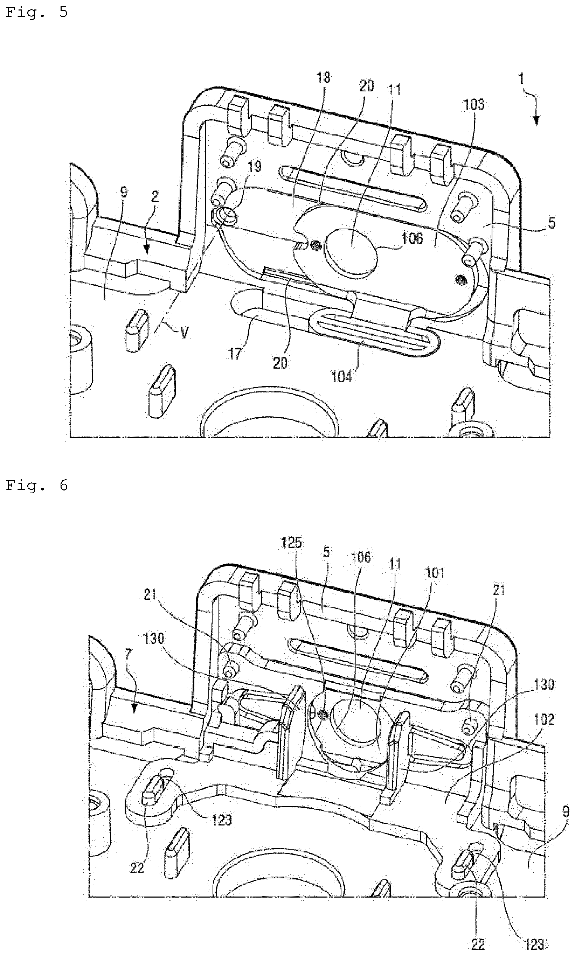

La platine 102 peut optionnellement comporter au moins un renfort 130 s'étendant entre la portion de solidarisation 120 et la portion de coopération 121 (notamment entre la deuxième face principale 120b et la deuxième face principale 121b). Par exemple, comme illustré à la figure 6, la platine 102 comporte au moins un premier renfort 130 et un deuxième renfort 130 agencés de part et d'autre de l'orifice 125. Par exemple chaque renfort 130 est agencé au niveau de l'extrémité d'attache d'une des pattes 128 au reste de la portion de coopération 121.

En référence aux différentes figures, l'obturateur 100 ainsi décrit est donc conformé pour pouvoir être fixé à un équipement électronique.

L'équipement électronique est par exemple un boitier électronique et par exemple un boitier décodeur 1 ou boitier décodeur audio-vidéo (en anglais, *Set-Top Box*).

Le boitier décodeur 1 comporte un caisson 2.

De préférence, le caisson 2 est en au moins deux parties. Par exemple le caisson 2 comporte une embase et un capot 7 formant conjointement le caisson 2.

Préférentiellement, l'embase et le capot 7 sont aptes à être emboités ou encliquetés l'un dans l'autre. De préférence, une fois l'embase et le capot 7 solidarisés l'un à l'autre, on vient les fixer l'un à l'autre par des premiers moyens de fixation comprenant par exemple des vis. Par ailleurs, le boitier décodeur 1 comporte un capteur optique 8.

De façon connue en soi, le capteur optique 8 présente un champ de vision (i.e. la zone de vision que le capteur optique 8 peut capturer lors d'une prise d'image) qui est centré autour d'un axe de vision 10 du capteur optique 8. Le capteur optique 8 est agencé dans le boitier décodeur 1 de sorte à être fixe par rapport au caisson 2.

Le capteur optique 8 est par exemple une caméra et par exemple une caméra comprenant un capteur électronique (par exemple de type CMOS ou CCD) et au moins une lentille optique.

Le capteur optique 8 est entièrement agencé à l'intérieur du caisson 2.

Typiquement, au moins une ouverture 11 est ménagée dans l'un des flancs latéraux 5 du boitier décodeur 1.

L'ouverture 11 s'étend donc en façade du boitier décodeur 1.

L'ouverture 11 s'étend à travers le flanc latéral 5 de manière rectiligne selon une direction O.

L'ouverture 11 est traversante de sorte à déboucher à une première extrémité à l'intérieur du caisson 2 et à une deuxième extrémité à l'extérieur du caisson 2.

L'ouverture 11 présente une section transversale (selon un plan de section de normale la direction O) qui est ici circulaire.

L'ouverture 11 présente une section transversale qui s'agrandit en direction de l'extérieur du caisson 2.

Ainsi l'ouverture 11 est conformée en tronc de cône sur au moins un tronçon de l'ouverture 11.

Le capteur optique 8 est par ailleurs agencé de sorte que son axe de vision 10 s'étende à travers le flanc latéral 5 depuis l'intérieur du caisson 2 jusqu'à l'extérieur du caisson 2 par l'intermédiaire de ladite ouverture 11. *L'axe de vision 10 est bien entendu un axe imaginaire de sorte qu'il s'étende virtuellement à travers l'ouverture 11.*

Par ailleurs, le capteur optique 8 est agencé de sorte que son axe de vision 10 soit incliné (i.e. ni parallèle ni orthogonale) vis-à-vis d'un plan donné. Le plan donné est par exemple un plan parallèle à une face principale supérieure du caisson et/ou à une face principale inférieure du caisson. Ainsi, de préférence, ledit plan est horizontal lorsque la face principale inférieure repose sur une base horizontale.

Dès lors l'axe de vision 10 est incliné vis-à-vis de l'horizontal dans le cas présent.

L'axe de vision 10 est ainsi également incliné (et non orthogonal) au flanc latéral 5 dans lequel est ménagée l'ouverture 11.

Optionnellement, l'axe de vision 10 est incliné vers le haut vis-à-vis du plan dans lequel s'étend la face principale inférieure.

De préférence, la direction O selon lequel s'étend axialement l'ouverture 11 est parallèle à l'axe de vision 10 du capteur optique. De préférence la direction O est confondue avec l'axe de vision 10 du capteur optique 8.

Ainsi l'ouverture 11 et le champ de vision du capteur optique 8 s'étendent co-axialement.

Ceci permet à l'ouverture 11 d'éviter d'interférer avec le champ de vision.

De préférence afin de limiter encore davantage les interférences entre le champ de vision et l'ouverture 11, l'ouverture 11 est conformée pour présenter une section transversale plus large que la section transversale correspondante du champ de vision (pour un même plan de coupe de normale la direction O) et ce pour au moins une partie de tronçon de l'ouverture 11 (selon la direction O) et de préférence sur toute la longueur (selon la direction O) de l'ouverture 11.

Selon un mode de réalisation préféré, le boitier décodeur 1 comporte un support 12 portant le capteur optique 8. Le capteur optique 8 est ainsi fixé au support 12. Par exemple le capteur optique 8 est soudé au support.

Typiquement, le support 12 est une carte à circuits imprimés.

Le support 12 est ainsi conformé en une plaque. Son épaisseur est donc bien moins importante que ses autres dimensions. Le support 12 présente ainsi deux faces principales. Lesdites faces sont planes. Lesdites faces s'étendent parallèlement entre elles.

Le support 12 est lui-même fixé au caisson 2 et agencé à l'intérieur du caisson 2. Le support 12 est par exemple fixé au capot 7. De préférence, le support 12 est fixé au capot 7 au niveau d'une paroi principale 9 du capot 7 et/ou du flanc latéral 5 dans lequel l'ouverture 11 est ménagée. A cet effet, le boitier décodeur 1 comporte des moyens de fixation du support 12 au caisson 2. Par exemple les moyens de fixation comportent au moins une vis 13 et le capot 7 au moins un fût de vissage 14 correspondant dans lequel la vis 13 est logée. De préférence, les deuxièmes moyens de fixation comportent au moins deux vis 13 venant chacune se visser en service dans l'un des au moins deux fûts de vissage 14 correspondants du capot 7.

Par exemple le support 12 comporte au moins un trou 15 le traversant de sorte à déboucher à une première extrémité sur la première face principale du support 12 et à une deuxième extrémité sur la deuxième face principale du support 12, le trou 15 s'étendant ainsi orthogonalement auxdites faces.

Ainsi il suffit d'agencer une première vis 13 à travers l'un des trous 15 du support 12 puis dans le fût 14 correspondant du capot 7 et la deuxième vis 13 à travers l'autre trou 15 du support dans l'autre fût 14, pour fixer le support 12 au capot 7.

Au moins l'un des fûts 14 s'étend rectilignement et longitudinalement selon une direction U. Par ailleurs au moins l'un des fûts 14 est agencé de sorte que lorsque le support 12 est fixé au capot 7 via les fûts 14, la direction U se trouve orthogonale au plan dans lequel s'étend la première face principale du support 12.

Selon un mode de réalisation particulier, le support 12 est agencé de manière inclinée vis-à-vis du flanc latéral 5 portant l'ouverture 11.

Par ailleurs le capteur optique 8 est agencé sur la première face principale du support 12 de sorte que son axe de vision 10 s'étende orthogonalement à ladite face.

De la sorte, le capteur optique 8 est bien incliné vis-à-vis de l'horizontal.

De préférence, une fenêtre de protection 16 est agencée au niveau de la deuxième extrémité de l'ouverture 11 (soit celle débouchant sur l'extérieur).

Ceci permet de protéger le capteur optique 8 de l'environnement extérieur (poussière par exemple).

Afin de pouvoir masquer temporairement le champ de vision du capteur optique 8, l'obturateur 100 est agencé entre le caisson 2 et le capteur optique 8.

Au cours d'une première étape de montage, le cache 101 est tout d'abord agencé dans le caisson 2 de sorte que la protection 103 s'étende au niveau du flanc latéral 5 portant l'orifice 11 et que sa languette 104 s'étende au niveau de la paroi principale 9.

La portion d'attache 105 est donc conformée pour épouser au mieux la jonction entre le flanc latéral 5 et la paroi principale 9.

Par ailleurs, un trou 17 perce la paroi principale 9 de sorte à déboucher sur une face extérieure de la paroi principale 9 d'une part et sur une face intérieure de la paroi principale 9 d'autre part. Le trou 17 s'étend selon une direction V (direction qui est parallèle à l'axe A lorsque le cache 101 est en place). Le trou 17 a par exemple une section transversale (de normale la direction V) de forme oblongue.

La languette 104 est ainsi reçue à l'intérieur dudit trou 17 de sorte à pouvoir coulisser le long dudit trou selon l'axe B qui est ici parallèle à une direction définissant la longueur ou la largeur de la paroi principale. Bien entendu, l'obturateur 100 est agencé de sorte que sa zone texturée 113 soit accessible par l'utilisateur depuis l'extérieur du caisson 2. L'obturateur 100 est donc conformé de sorte que la deuxième face principale 111b soit dans un même plan que la face extérieure de la paroi principale 9 ou dépasse de celle-ci.

Par ailleurs, un renfoncement 18 est ménagé dans le flanc latéral 5 (côté interne au caisson 2) pour recevoir à coulissement la protection 103. Le renfoncement 18 ne débouche pas à l'extérieur du caisson 2.

Le renfoncement 18 s'étend longitudinalement selon une direction qui définit la longueur ou la largeur du flanc latéral 5.

Le renfoncement 18 présente une section transversale (de normale l'axe A lorsque la protection 103 est en place dans le renfoncement 18) de forme identique à celle de la protection 103 mais présentant une longueur plus importante que celle de la protection 103. Le renfoncement 18 présente donc ici une section transversale oblongue.

De préférence, le caisson 2 comporte au moins un guide 20 pour faciliter le coulissement de la protection 103 relativement au caisson 2 et préférentiellement au moins deux guides 20.

Au moins l'un des guides 20 est conformé en une rainure s'étendant parallèlement à l'axe C lorsque le cache 101 est en place dans le renfoncement 18. Au moins une rainure est ainsi ménagée dans le renfoncement 18. Au moins une des rainures est apte à recevoir à coulissement au moins une des baguettes de la protection 103. Dans le cas présent, le caisson 2 comporte donc deux rainures s'étendant parallèlement entre elles, l'une sur le bord supérieur et l'autre sur le bord inférieur du renfoncement 18.

De préférence, le caisson est muni d'au moins trou 19 traversant le flanc latéral 5 de part en part. Le trou 19 s'étend ainsi selon une direction parallèle à l'axe B lorsque le cache 101 est en place dans le renfoncement 18. Un tel trou 19 est ainsi débouchant sur les deux faces principales du flanc latéral 5.

Le trou 19 est agencé pour permettre à un utilisateur de visualiser depuis l'extérieur du caisson 2 un signal lumineux lié au capteur optique 8 : si le capteur optique 8 est allumé (et que l'utilisateur peut être filmé) alors le signal lumineux permet de l'indiquer, par exemple en émettant une lumière par exemple de couleur rouge. En revanche si le capteur optique 8 est éteint, alors le signal lumineux permet également de l'indiquer (par exemple en n'émettant aucune lumière).

De manière avantageuse, l'encoche 107 permet au cache 101 de ne pas boucher ce trou 19 : l'utilisateur a donc toujours accès depuis l'extérieur du caisson 2 au signal lumineux, quelle que soit la position du cache 101 vis-à-vis du caisson 2.

Au cours d'une deuxième étape de montage, on rapporte la platine 102 contre le cache 101.

De manière avantageuse, le caisson 2 comporte des pions 21 venant s'enficher dans les positionneurs 127 ce qui facilite le bon positionnement de la platine 102 relativement au caisson 2.

De la même façon, le caisson 2 comporte des nervures 22 venant s'enficher dans les ouvertures 123 de la portion de solidarisation 120.

Ceci facilite le bon positionnement de la platine 102 relativement au caisson 2. Une opération de bouterollage (par exemple à chaud) des nervures 22 permet ensuite de fixer la platine 102 au caisson 2.

Dans cette position une première face de la platine 102 (définie au moins par la première face 120a et la première face 121a) est ainsi tournée vers la deuxième face du cache (définie au moins par la première face 103b et la deuxième face 111a).

Dans cette position, le cache 101 se trouve ainsi agencé entre le caisson 2 et la platine 102. Dans cette position, le cache 101 se trouve agencé entre le caisson 2 et la portion de coopération 121 de la platine 102. Dans cette position, la protection 103 se trouve agencée entre le caisson 2 et la portion de coopération 121 de la platine 102.

La première face principale 103a de la protection 103 du cache 101 est tournée vers la face principale interne du flanc latéral 5 et/ou est tournée vers l'intérieur du renfoncement 18.

La deuxième face principale 103b de la protection 103 du cache 101 est tournée vers la face principale de la portion de solidarisation 120 de l'obturateur 100. De la sorte, les organes portés par le cache 101 se trouve en vis-à-vis des organes portés par l'obturateur 100.

Bien entendu, l'obturateur 100 est conformé de sorte que l'axe F est parallèle à l'axe de vision 10 du capteur optique. De préférence l'axe F est confondu avec l'axe de vision 10 du capteur optique 8. Ainsi l'orifice 125 et le champ de vision du capteur optique 8 s'étendent co-axialement. Ceci permet à l'orifice 125 d'éviter d'interférer avec le champ de vision.

Bien entendu (pour chaque plan de section l'axe E) l'orifice 125 comme l'orifice 106 ont tous les deux un diamètre au moins supérieur au diamètre du champ de vision. Ceci permet à l'orifice d'éviter d'interférer avec le champ de vision.

Contrairement à la platine 102 qui est fixée au caisson 2, le cache 101 peut encore se déplacer relativement au caisson 2 mais uniquement selon son mouvement de translation selon l'axe B.

Au cours d'une troisième étape de montage, le support 12 portant le capteur optique 8 est alors fixé au capot 7 comme indiqué précédemment. Une partie du capteur optique 8 peut optionnellement s'étendre à travers l'orifice 125 sans toutefois en dépasser pour permettre au cache 102 de pouvoir coulisser relativement à la platine 101.

En service lorsque l'on souhaite filmer avec le capteur optique 8, le cache 101 est dans une première position dite position inactive.

Dans cette position, son orifice 106 s'étend dans l'alignement de celui 11 du flanc latéral 5 (et donc de celui 125 de la platine 102). Par exemple l'orifice 106 est tel que l'axe A est parallèle à l'axe de vision 10 du capteur optique. De préférence l'axe A est alors confondu avec l'axe de vision 10 du capteur optique 8. Ainsi l'orifice 106 et le champ de vision du capteur optique 8 s'étendent coaxialement. Ceci permet à l'orifice 105 d'éviter d'interférer avec le champ de vision.

Dans cette position, l'obturateur 100 permet d'assurer la visualisation du signal lumineux grâce à l'alignement du guide lumineux 126 et d'un trou 19. Par exemple, le guide lumineux 126 et le trou 19 s'étendent coaxialement entre eux et à l'axe A. De préférence, le guide lumineux 126 s'étend jusque dans le trou 19 voire s'étend jusqu'à la face principale externe du flanc latéral 5 dans lequel est ménagé le trou 19.

De façon avantageuse, le cache 101 est maintenu dans sa position inactive du fait de la coopération entre le premier organe mâle 109 et le premier organe femelle 110. Lorsque l'on souhaite bloquer le champ de vision du capteur optique 8, il suffit de faire coulisser la languette 104 (provoquant la désolidarisation entre le premier organe mâle 109 et le premier organe femelle 110) jusqu'à ce que le deuxième organe mâle 111 vienne s'enficher dans le deuxième organe femelle 112.

Le cache 101 se trouve alors dans sa deuxième position (ou position active) : une portion pleine de la protection 103 est alors agencée entre l'ouverture 11 et le capteur optique 8 bloquant le champ de vision de celui-ci.

De façon avantageuse, l'utilisateur voit toujours le signal lumineux associé au capteur optique 8 grâce à l'encoche 107 ménagée dans cette portion pleine et au trou 19. Par exemple, l'encoche 107 et le trou 19 s'étendent coaxialement entre eux.

De façon avantageuse encore, le témoin visuel 108 est visible depuis l'extérieur du caisson 2 à travers l'ouverture 11. L'utilisateur peut ainsi comprendre rapidement que le champ de vision du capteur optique 8 est masqué.

Pour repasser dans la position inactive, il suffit de faire coulisser la languette 104 (provoquant la désolidarisation entre le deuxième organe mâle 111 et le deuxième organe femelle 113) jusqu'à ce que le premier organe mâle 109 vienne s'enficher de nouveau dans le premier organe femelle 111.

Le passage d'une position à une autre du cache 101 est ainsi très simple.

On note que la coopération des organes mâles/femelles permet de définir des butées pour le coulissement du cache 101 et ainsi de définir la position active et la position inactive du cache 101.

En outre, ceci permet de bien maintenir en place le cache 101 vis-à-vis du caisson 2 et de la platine 102.

On limite ainsi un risque que le cache 101 ne vibre relativement au capot 7 notamment sur un axe orthogonal à l'axe de vision 10 du capteur optique 8.

De plus la souplesse des pattes 128 portant les organes mâles 109, 111 participe à limiter la transmission des vibrations du caisson 2 au cache 101 notamment dans l'axe de vision 10.

De préférence, le renfoncement 18 est conformé de sorte que ses côtés forment une première butée pour un premier côté de la protection 103 dans la position active et une deuxième butée pour un deuxième côté de la protection 103 dans sa position inactive.

De préférence également, le trou 17 est conformé de sorte ses côtés forment une première butée pour un premier côté de la languette 104 dans la position active et une deuxième butée pour un deuxième côté de la languette 104 dans sa position inactive.

Bien entendu, l'invention n'est pas limitée au mode de réalisation décrit mais englobe toute variante entrant dans le champ de protection de l'invention telle que définie par les revendications.

En particulier, au moins un organe mâle pourra être porté par le cache et au moins un organe femelle correspondant par la platine.

L'obturateur pourra être fixé autrement au caisson que ce qui a été indiqué et par exemple par des ensembles vis-écrous.

Bien qu'ici l'obturateur soit fixé au caisson, l'obturateur pourra être d'une pièce avec le caisson. On pourra ainsi avoir la platine venue de matière avec le caisson. Par exemple la portion de solidarisation pourra être venue de matière avec le caisson.

Dans tous les cas, l'obturateur comprendra de préférence une portion de solidarisation au caisson (d'une seule pièce avec le caisson ou fixée au caisson) et une portion de coopération s'étendant de préférence dans un plan différent de la portion de solidarisation.

Dans tous les cas de préférence, la portion de coopération s'étendra entre le cache et le caisson.

L'équipement électronique pourra être un autre équipement qu'un boitier électronique. Le boitier décodeur pourrait être intégré à une télévision, ou bien être situé dans un appareil offrant d'autres fonctionnalités (par exemple une console de jeux).

En place d'être solidaire du capot, l'obturateur pourra être solidaire de l'embase.

L'ouverture pourrait être ménagé dans l'embase et non dans le capot.

La portion de coopération pourra s'étendre parallèlement ou orthogonalement à la portion de solidarisation.

La languette de manipulation pourra s'étendre parallèlement ou orthogonalement à la protection.

Bien qu'ici le capteur optique soit agencé de sorte que son axe de vision soit incliné vers le haut (i.e. en direction de la face principale supérieure), le capteur optique pourra être agencé de sorte que son axe de vision soit incliné vers le bas (i.e. en direction de la face principale inférieure) ou pourra être agencé de sorte que son axe de vision s'étende à l'horizontal. De préférence, le cache coulissera selon une direction orthogonale à l'axe de vision du capteur optique et/ou parallèlement au support portant le capteur optique.

Le support pourra être une simple plaque et non une carte à circuits imprimés.

Le support pourra être agencé de manière parallèle (et non incliné comme ce qui a été proposé) vis-à-vis du flanc dans lequel l'ouverture est ménagée et/ou le capteur optique pourra être agencé de sorte que son axe de vision soit incliné ou orthogonal vis-à-vis d'une des faces principales du support.

## Revendications

1. Obturateur comprenant :
- Une platine (102),
- Un cache (101) comportant une protection (103) et une languette (104) de manipulation de la protection, le cache étant apte à se déplacer relativement à la platine entre une position active et une position inactive,
- au moins un couple organe mâle/organe femelle agencé l'un sur la platine et l'autre sur le cache de sorte que la coopération de l'organe mâle et de l'organe femelle bloque en position temporairement le cache dans l'une au moins de ses deux positions,
dans lequel la protection comporte une première face principale et une deuxième face principale, au moins un organe mâle ou un organe femelle du couple étant agencé sur une desdites faces principales de la protection (103),
**caractérisé en ce que**
l'obturateur comprend un premier couple organe mâle/organe femelle (109, 110) pour bloquer le cache dans une première position et un deuxième couple organe mâle/organe femelle (111, 112) pour bloquer le cache dans une deuxième position,
au moins un premier organe - mâle ou femelle - et au moins un deuxième organe - mâle ou femelle - étant agencés sur ladite face principale de la protection, le premier organe appartenant au premier couple d'organes mâle/femelle et le deuxième organe appartenant au deuxième couple d'organes mâle/femelle,
le premier organe et le deuxième organe étant agencés sur des côtés opposés de ladite face principale.

2. Obturateur selon l'une quelconque des revendications précédentes, dans lequel au moins un organe mâle (109, 111) est un élément en relief et au moins un organe femelle (110, 112) est un logement épousant la forme de l'élément en relief.

3. Obturateur selon la revendication 2, dans lequel l'élément en relief est partiellement hémisphérique.

4. Obturateur selon l'un des revendications précédentes, dans lequel au moins un organe mâle (109, 111) est porté par la platine (102) et au moins un organe femelle (110, 112) est porté par le cache (101).

5. Obturateur selon l'une des revendications précédentes, dans lequel au moins une patte (128) est ménagée sur la platine (102), la patte portant l'organe mâle ou l'organe femelle de la platine.

6. Obturateur selon la revendication 5, dans lequel la patte (128) est une découpe de la platine.

7. Obturateur selon l'une des revendications précédentes, dans lequel la languette (104) est pourvue d'au moins une zone texturée.

8. Obturateur selon l'une des revendications précédentes, comprenant une portion d'attache flexible entre la protection (103) et la languette (104).

9. Obturateur selon l'une des revendications précédentes, dans lequel le cache (101) est muni d'un témoin visuel (108) d'au moins l'une de ses positions.

10. Obturateur selon l'une des revendications précédentes, dans lequel le cache (101) comporte au moins une encoche latérale (107).

11. Obturateur selon l'une des revendications précédentes, dans lequel le cache (101) comprend au moins un guide (1100) de son coulissement.

12. Obturateur selon l'une des revendications précédentes, dans lequel la platine (102) comporte au moins un guide de lumière (126).

13. Obturateur selon l'une des revendications précédentes, dans lequel la platine (102) comporte au moins un positionneur (127).

14. Equipement électronique comprenant :
- Un caisson (2),
- Un capteur optique (8) agencé dans le caisson,
- Un obturateur selon l'une des revendications précédentes, l'obturateur étant agencé de sorte que dans sa position active il soit devant le capteur optique et dans une position inactive il soit décalé du capteur optique.

15. Equipement électronique selon la revendication 14, dans lequel l'équipement est un boitier électronique.

16. Equipement électronique selon la revendication 15, comprenant un support (12) portant le capteur optique (8), le cache (101) étant agencé entre le caisson (2) et la platine (102) et la platine étant agencée entre le cache et le support.

## Patentansprüche

1. Verschluss, umfassend:
- eine Platte (102),
- eine Abdeckung (101) mit einem Schutzelement (103) und einer Betätigungslasche (104) zur Betätigung des Schutzelements, wobei die Abdeckung relativ zu der Platte zwischen einer aktiven und einer inaktiven Stellung verschoben werden kann,
- zumindest ein Paar aus einem männlichen und einem weiblichen Element, von denen das eine auf der Platte und das andere auf der Abdeckung angeordnet ist, sodass das Zusammenwirken des männlichen und des weiblichen Elements die Abdeckung vorübergehend in zumindest einer ihrer beiden Stellungen fixiert,
wobei das Schutzelement eine erste Hauptfläche und eine zweite Hauptfläche enthält, wobei zumindest ein männliches Element oder ein weibliches Element aus dem Elementenpaar auf einer dieser Hauptflächen des Schutzelements (103) angeordnet ist,
**dadurch gekennzeichnet, dass**
der Verschluss umfasst: ein erstes Paar aus einem männlichen und einem weiblichen Element (109, 110), das dazu dient, die Abdeckung in einer ersten Stellung zu fixieren, und ein zweites Paar aus einem männlichen und einem weiblichen Element (111, 112), das dazu dient, die Abdeckung in einer zweiten Stellung zu fixieren,
wobei zumindest ein erstes, männliches oder weibliches Element und zumindest ein zweites, männliches oder weibliches Element auf der Hauptfläche des Schutzelements angeordnet sind, wobei das erste Element zu dem ersten Paar aus einem männlichen und einem weiblichen Element gehört und das zweite Element zu dem zweiten Paar aus einem männlichen und einem weiblichen Element gehört,
wobei das erste Element und das zweite Element an entgegengesetzten Seiten der Hauptfläche angeordnet sind.

2. Verschluss nach einem der vorhergehenden Ansprüche, wobei es sich bei zumindest einem männlichen Element (109, 111) um ein erhabenes Element und bei zumindest einem weiblichen Element (110, 112) um eine Aufnahme handelt, welche der Form des erhabenen Elements entspricht.

3. Verschluss nach Anspruch 2, wobei das erhabene Element teilweise halbkugelförmig ausgebildet ist.

4. Verschluss nach einem der vorhergehenden Ansprüche, wobei zumindest ein männliches Element (109, 111) von der Platte (102) getragen wird und zumindest ein weibliches Element (110, 112) von der Abdeckung (101) getragen wird.

5. Verschluss nach einem der vorhergehenden Ansprüche, wobei zumindest eine Lasche (128) auf der Platte (102) ausgebildet ist, wobei die Lasche das männliche Element oder das weibliche Element der Platte trägt.

6. Verschluss nach Anspruch 5, wobei die Lasche (128) durch einen Ausschnitt in der Platte gebildet wird.

7. Verschluss nach einem der vorhergehenden Ansprüche, wobei die Betätigungslasche (104) mit zumindest einer strukturierten Zone versehen ist.

8. Verschluss nach einem der vorhergehenden Ansprüche, welcher zwischen dem Schutzelement (103) und der Betätigungslasche (104) einen flexiblen Befestigungsabschnitt umfasst.

9. Verschluss nach einem der vorhergehenden Ansprüche, wobei die Abdeckung (101) mit einer optischen Anzeige (108) zum Anzeigen zumindest einer ihrer Stellungen versehen ist.

10. Verschluss nach einem der vorhergehenden Ansprüche, wobei die Abdeckung (101) zumindest eine seitliche Einkerbung (107) enthält.

11. Verschluss nach einem der vorhergehenden Ansprüche, wobei die Abdeckung (101) zumindest eine Führung (1100) umfasst, in welcher sie verschoben werden kann.

12. Verschluss nach einem der vorhergehenden Ansprüche, wobei die Platte (102) zumindest einen Lichtleiter (126) enthält.

13. Verschluss nach einem der vorhergehenden Ansprüche, wobei die Platte (102) zumindest einen Positionierer (127) enthält.

14. Elektronisches Gerät, umfassend:
- einen Korpus (2),
- einen optischen Sensor (8), der in dem Korpus angeordnet ist,
- einen Verschluss nach einem der vorhergehenden Ansprüche, wobei der Verschluss derart angeordnet ist, dass er sich in seiner aktiven Stellung vor dem optischen Sensor befindet und in einer inaktiven Stellung gegenüber dem optischen Sensor versetzt angeordnet ist.

15. Elektronisches Gerät nach Anspruch 14, wobei es sich bei dem Gerät um ein Elektronikgehäuse handelt.

16. Elektronisches Gerät nach Anspruch 15, umfassend einen Träger (12), welcher den optischen Sensor (8) trägt, wobei die Abdeckung (101) zwischen dem Korpus (2) und der Platte (102) angeordnet ist, und wobei die Platte zwischen der Abdeckung und dem Träger angeordnet ist.

## Claims

1. Shutter comprising:
- A plate (102),
- A cover (101) comprising a protection (103) and a strip (104) for handling the protection, the cover being capable of being moved relative to the plate between an active position and an inactive position,
- At least one male member/female member arranged, one on the plate and the other on the cover, such that the engagement of the male member and of the female member temporarily blocks in position the cover in at least one of its two positions,
wherein the protection comprises a first main face and a second main face, at least one male member or one female member of the pair being arranged on one of said main faces of the protection (103), being **characterized in that** the shutter comprises a first male member/female member pair (109, 110) to block the cover in a first position and a second male member/female member pair (111, 112) to block the cover in a second position,
at least one first member - male or female - and at least one second member - male or female - are arranged on one of said main faces of the protection, the first member belonging to the first male/female member pair and the second member belonging to the second male/female member pair,
the first member and the second member being are arranged on opposite sides of the main face.

2. Shutter according to any one of the preceding claims, wherein at least one male member (109, 111) is a raised element and at least one female member (110, 112) is a housing moulding the shape of the raised element.

3. Shutter according to claim 1à2, wherein the raised element is partially hemispherical.

4. Shutter according to one of the preceding claims, wherein at least one male member (109, 111) is carried by the plate (102) and at least one female member (110, 112) is carried by the cover (101).

5. Shutter according to one of the preceding claims, wherein at least one tab (128) is provided on the plate (102), the tab carrying the male member or the female member of the plate.

6. Shutter according to claim 5, wherein the tab (128) is a cutout of the plate.

7. Shutter according to one of the preceding claims, wherein the strip (104) is provided with at least one textured zone.

8. Shutter according to one of the preceding claims, comprising a flexible fastening portion between the protection (103) and the strip (104).

9. Shutter according to one of the preceding claims, wherein the cover (101) is provided with a visual indicator (108) of at least one of its positions.

10. Shutter according to one of the preceding claims, wherein the cover (101) comprises at least one lateral notch (107).

11. Shutter according to one of the preceding claims, wherein the cover (101) comprises at least one guide (1100) of its sliding.

12. Shutter according to one of the preceding claims, wherein the plate (102) comprises at least one light guide (126).

13. Shutter according to one of the preceding claims, wherein the plate (102) comprises at least one positioner (127).

14. Electronic equipment comprising:
- A chamber (2),
- An optical sensor (8) arranged in the chamber,
- A shutter according to one of the preceding claims, the shutter being arranged, such that in its active position, it is in front of the optical sensor and in an inactive position, it is offset from the optical sensor.

15. Electronic equipment according to claim 14, wherein the equipment is an electronic casing.

16. Electronic equipment according to claim 15, comprising a support (12) carrying the optical sensor (8), the cover (101) being arranged between the chamber (2) and the plate (102) and the plate being arranged between the cover and the support.
